**Europäisches Patentamt**

**European Patent Office**

**Office européen des brevets**

(19)

(11)   **EP 1 233 402 A1**

(12)   # DEMANDE DE BREVET EUROPEEN

(43) Date de publication:
**21.08.2002 Bulletin 2002/34**

(51) Int Cl.⁷: **G09G 5/36**, G09G 5/06,
      G09G 1/16

(21) Numéro de dépôt: **02075551.8**

(22) Date de dépôt: **11.02.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **13.02.2001 FR 0101945**

(71) Demandeur: **Koninklijke Philips Electronics N.V.
5621 BA Eindhoven (NL)**

(72) Inventeur: **Pasquier, Laurent
75008 Paris (FR)**

(74) Mandataire: **Landousy, Christian
Société Civile S.P.I.D.
156, Boulevard Haussmann
75008 Paris (FR)**

(54)   **Système de traitement de motifs graphiques ayant des formats différents parmi extraction de pixels et acheminement des mêmes vers différents moyens de codage**

(57)   La présente invention concerne un circuit intégré et un procédé de traitement de motifs graphiques comprenant des pixels. Le circuit (CH) est intégré dans un coprocesseur de sortie vidéo. Le circuit comprend, d'une part, une mémoire unique (RAM) destinée à sauvegarder les motifs, et, d'autre part, des moyens d'extraction (PE) de pixels destinés à extraire des pixels en fonction d'une indication du nombre de bits par pixel issu du motif sélectionné, et à les acheminer vers des moyens de codage (CM). Les pixels sont alors caractérisés en couleur par des moyens de codage (CM) en vue d'un affichage sur un écran vidéo. Le circuit évite d'utiliser une mémoire externe (SDRAM) et ainsi d'encombrer la bande passante du bus vidéo.

FIG.4

EP 1 233 402 A1

**Description**

La présente invention concerne un circuit intégré de traitement d'ensembles de données, lesdits ensembles de données comportant des pixels. Elle concerne également un procédé de traitement d'ensembles de données adapté audit circuit.
Elle trouve une application particulière notamment dans le domaine de la télévision numérique.

Le brevet américain numéro 5 883 670 décrit un circuit de traitement d'images intégré dans un processeur vidéo. Le circuit est relié à un ordinateur. A cet ordinateur est associée une mémoire volatile SDRAM par exemple, de l'ordre de quelques mégaoctets. Le circuit comprend des moyens de décodage d'images. Des flux d'images qui arrivent par un canal vidéo sont sauvegardés et traités dans la mémoire au fur et mesure du décodage des images. Un bus standard type PG est utilisé lorsque le circuit veut accéder à ladite mémoire.

Dans ledit domaine de la télévision numérique, il est fréquent d'utiliser des ensembles de données tels que des motifs graphiques (des icônes, des caractères, etc...) et de les superposer à des images. Par exemple, des caractères sont utilisés lors d'une traduction visuelle à l'écran d'un film dans une langue étrangère. Pour traiter une image avec de tels motifs, on effectue les étapes suivantes :

- sauvegarde de flux d'images codés provenant du canal vidéo et de motifs dans la mémoire SDRAM,
- traitement d'un flux d'images :

  - lecture d'un flux d'images dans la mémoire volatile SDRAM,
  - décodage du flux d'images,
  - écriture du flux d'images ainsi décodé dans la mémoire SDRAM,
  - lecture du flux d'images afin d'effectuer une étape de correction d'erreurs inhérentes au codage d'images au moyen d'un coprocesseur dédié, (correction couramment appelée dans la langue anglaise « post-processing »)
  - réécriture de l'image améliorée dans la mémoire SDRAM,

- traitement des motifs :

  - lecture des motifs dans la mémoire volatile SDRAM,
  - traitement des motifs au moyen d'un coprocesseur graphique dédié,
  - réécriture des motifs dans la mémoire SDRAM,

- lecture par le processeur vidéo du flux d'images et des motifs ainsi traités,
- composition par ledit processeur de l'image à afficher avec ledit flux et lesdits motifs,
- affichage de l'image composée par un coprocesseur de sortie vidéo. Un flux d'images décodé prend une place de 20Méga-octets par seconde (un octet comportant 8 bits), en définition normale et de 124Méga-octets en haute définition, d'après une des possibilités du standard ATSC « Advanced Television Standards Comittee ». Par conséquent, pour gérer un flux d'images comme décrit précédemment, il faut plus de 100Méga-octets/s = (2+2+1)*20 de bande passante pour des images en définition normale, et plus de 620Méga-octets/s =(2+2+1)*124 de bande passante pour des images en haute définition (deux lectures, deux écritures pour le décodage et l'amélioration, une lecture pour la composition), sans compter le traitement des différents motifs. Si pour traiter une image avec des motifs, on utilise le système décrit précédemment, il risque d'y avoir de nombreux accès en mémoire SDRAM, une surcharge au niveau du bus de données et par suite un encombrement important de la bande passante.

Aussi un problème technique à résoudre par l'objet de la présente invention est de proposer un circuit intégré de traitement d'ensembles de données dans une image, lesdits ensembles de données comportant des pixels, ainsi qu'un procédé associé, qui permettraient notamment de réduire les accès en mémoire et de diminuer l'encombrement de la bande passante.

Une solution au problème technique posé se caractérise, selon un premier objet de la présente invention, en ce que le circuit intégré comporte :

- une mémoire unique apte à sauvegarder au moins un ensemble de données comprenant un nombre de pixels de taille variable d'un type d'ensemble à un autre,
- des moyens de contrôle de pixels aptes à donner une indication du type d'un ensemble de données,
- des moyens d'extraction de pixels aptes à sélectionner et lire ledit ensemble de données, à extraire au moins un pixel dudit ensemble de données en sortie de ladite mémoire en fonction de ladite indication, et à acheminer ledit au moins pixel vers des moyens de codage.

Selon un second objet de la présente invention, cette solution se caractérise, en ce que le procédé de traitement d'ensembles de données comporte les étapes de :

- sauvegarder dans une mémoire unique au moins un ensemble de données comprenant un nombre de pixels de taille variable d'un type d'ensemble à un autre,
- donner une indication du type d'un ensemble de données,
- sélectionner et lire ledit ensemble de données,
- extraire au moins un pixel dudit ensemble de données en sortie de ladite mémoire en fonction de ladite indication,
- acheminer ledit au moins pixel vers des moyens de codage.

Ainsi, comme on le verra en détail plus loin, grâce aux moyens de contrôle, d'extraction de pixels et de codage, on traite lesdits ensembles de données en temps réel en effectuant des lectures d'ensembles de données dans la mémoire du circuit intégré, sans avoir à passer par une mémoire externe. On réduit ainsi les accès en mémoire et par conséquent la bande passante est moins encombrée.

La description qui suit, en regard des dessins annexés, le tout donné à titre d'exemple non limitatif, fera bien comprendre en quoi consiste l'invention.

- la Fig. 1 illustre de façon schématique une architecture de circuit intégré selon l'invention,
- la Fig. 2 représente un mode de réalisation non limitatif de moyens d'extraction compris dans le circuit intégré de la figure 1,
- la Fig. 3 est un schéma de moyens de codage compris dans le circuit intégré de la figure 1,
- la Fig. 4 représente un mode de réalisation non limitatif du circuit intégré de la figure 1,
- la Fig. 5 illustre de façon schématique un premier mode de fonctionnement d'une partie du circuit intégré de la figure 1,
- la Fig. 6 illustre de façon schématique un second mode de fonctionnement d'une partie du circuit intégré de la figure 1.

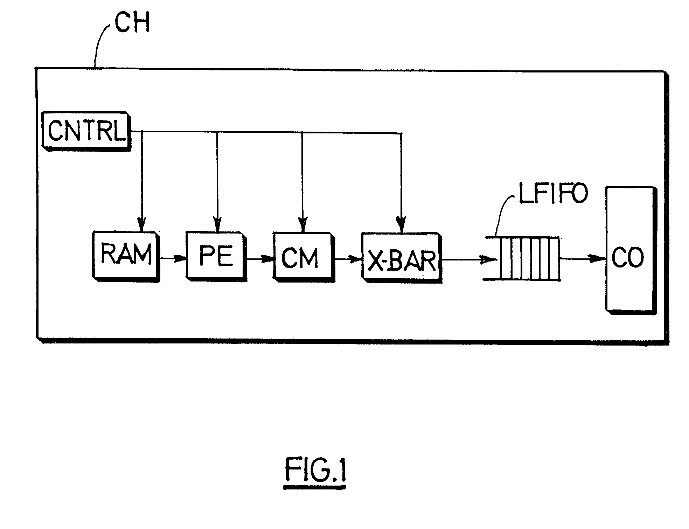

Le présent exposé de l'invention a trait à un exemple de circuit utilisé dans le domaine de la télévision. Sur la figure 1 est représenté un schéma d'une architecture de circuit intégré CH. Dans notre exemple, le circuit intégré CH est compris dans un système de télévision comportant notamment un écran d'affichage, une horloge CLK et un coprocesseur de sortie vidéo (non représentés). Préférentiellement, ledit circuit est compris dans un coprocesseur de sortie vidéo. Le circuit intégré CH comporte des moyens de contrôle de pixels CNTRL, par exemple un contrôleur classique, une mémoire volatile RAM unique, des moyens d'extraction de pixels PE, des moyens de codage CM et un compositeur CO d'images. Il comporte en outre des moyens d'aiguillage de pixels X-BAR et des moyens de file d'attente de pixels LFIFO. Les pixels sont compris dans des ensembles de données qui sont préférentiellement des motifs graphiques. Un motif graphique comporte un certain nombre de pixels et chaque pixel comporte un nombre déterminé de bits. Il existe plusieurs types de motifs. Selon le type du motif, le nombre de bits varie pour un pixel. Autrement dit, les pixels peuvent être codés sur un nombre de bits variable. Ainsi, pour un motif caractère, chaque pixel comporte 1 bit, tandis que pour des motifs icônes, chaque pixel peut comporter en général 2, 4, 8 ou 16 bits.

Lorsqu'un système de télévision est initialisé, des motifs graphiques stockés dans une mémoire externe au circuit intégré CH, par exemple une mémoire non volatile réinscriptible EEPROM (non représentée), sont transmis à la mémoire volatile RAM dudit circuit. On notera qu'en stockant ainsi des motifs dans une telle mémoire externe, on peut pré-programmer la mémoire externe avec des motifs variables selon des besoins d'un fournisseur ou utilisateur dudit système de télévision. On peut ainsi transmettre et sauvegarder dans la mémoire volatile RAM au moins un motif comprenant un nombre de pixels de taille variable d'un type d'ensemble à un autre.

Afin d'afficher des motifs dans une image sur écran de télévision, on effectue les étapes suivantes.

Dans une première étape, les moyens de contrôle CNTRL contrôlent les moyens d'extraction de pixels PE, en leur donnant le nombre de motifs à traiter et également une indication du type du motif dont les pixels doivent être extraits de ladite mémoire, un type de motif correspondant au nombre de bits par pixel du motif. Ledit contrôle s'effectue grâce à une table de référence (non représentée) comprenant notamment le type de chaque motif sauvegardé dans la mémoire RAM, le nombre de pixels par motif.

On remarquera qu'en vue de gérer différentes tailles de pixels, préférentiellement, la mémoire RAM comporte un flux de sortie d'une taille supérieure ou égale au nombre maximum de bits par pixel que l'on peut trouver dans un motif, soit ici 16 bits, la taille de la mémoire étant par exemple de 15 kilo-octets.

Dans une deuxième étape, les moyens d'extraction de pixels PE sélectionnent dans la mémoire volatile RAM un premier motif, lisent ledit motif et extraient au moins un pixel dudit motif en sortie de ladite mémoire en fonction de ladite indication de type et de la taille du flux de sortie de la mémoire RAM. Par la suite, lesdits moyens d'extraction PE acheminent ledit au moins pixel vers des moyens de codage CM. Ainsi, par exemple, si on a un motif icône comprenant quatre pixels de 8 bits chacun, les moyens d'extraction PE extraient deux pixels de 8 bits à partir du flux de sortie de 16 bits de la mémoire RAM. Ensuite, lesdits moyens acheminent les deux pixels vers les moyens de codage CM.

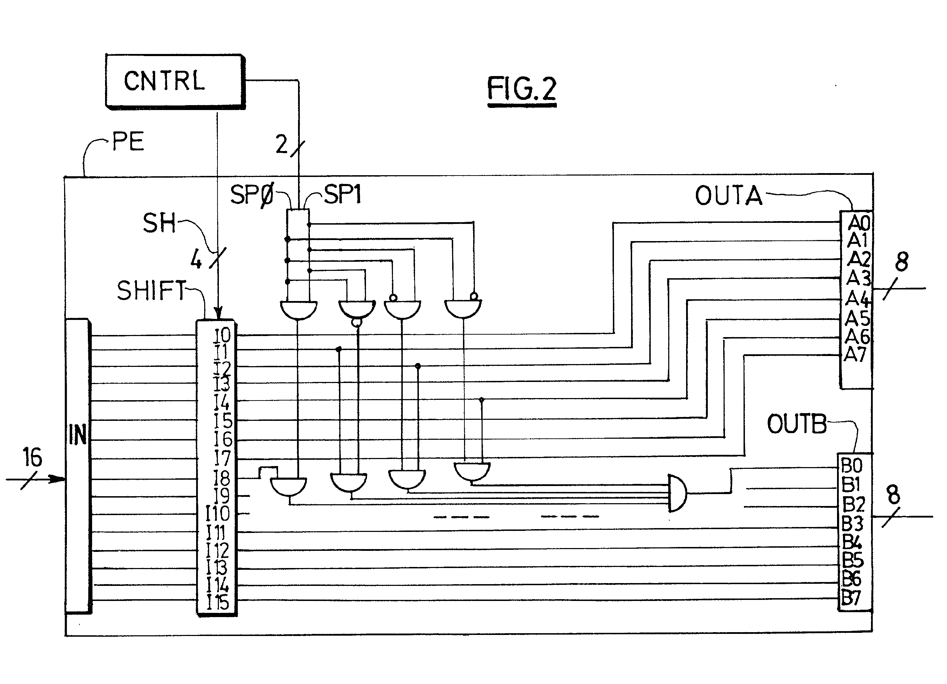

Selon un mode de réalisation non limitatif, les moyens d'extraction de pixels PE comportent des moyens de décalage de bits SHIFT tels que des registres à décalage, et des circuits logiques permettant d'effectuer les extractions de pixels et leur acheminement. Selon l'exemple de la figure 2, les moyens d'extraction PE permettent de gérer des pixels de 1, 2, 4 ou 8 bits. Ils comportent une entrée IN pouvant recevoir 16 bits et deux sorties OUTA et OUTB pouvant recevoir 8 bits chacune. Un pixel est acheminé vers une des ces deux sorties. Comme nous l'avons vu précédemment, les moyens de contrôle CNTRL envoient aux moyens d'extraction PE une indication de type. Cette indication est codée sur 2 bits SP0 et SP1 de la manière suivante :

SP0 = 0, SP1 = 0 pour un pixel codé sur 1 bit,
SP0 = 0, SP1 = 1 pour un pixel codé sur 2 bits,
SP0 = 1, SP1 = 0 pour un pixel codé sur 4 bits,
SP0 = 1, SP1 = 1 pour un pixel codé sur 8 bits,

Les moyens de contrôle CNTRL indiquent également selon l'indication de type, au moyen de bits de décalage SH, le décalage à effectuer sur les bits d'entrée afin de pouvoir les aiguiller vers les deux sorties OUTA et OUTB des moyens d'extraction PE et par conséquent vers les moyens de codage adéquats CM. Les moyens de décalage SHIFT reçoivent les différents bits lus dans la mémoire volatile RAM et les décalent en fonction des bits SH de décalage. En sortie des moyens de décalage SHIFT, on peut avoir jusqu'à 16 bits I0 à I15.

Les sorties OUTA et OUTB des moyens d'extractions PE peuvent prendre les valeurs des bits indiquées dans les deux tableaux suivants.

| Sortie OUTA | | | | | | | | | |
|---|---|---|---|---|---|---|---|---|---|
| Type du motif (nombre bits/pixel) | Indication de type | A0 | A1 | A2 | A3 | A4 | A5 | A6 | A7 |
| 1 | (SP0,SP1) = (0,0) | I0 | | | | | | | |
| 2 | (SP0,SP1) = (0,1) | I0 | I1 | | | | | | |
| 4 | (SP0,SP1) = (1,0) | I0 | I1 | I2 | I3 | | | | |
| 8 | (SP0,SP1) = (1,1) | I0 | I1 | I2 | I3 | I4 | I5 | I6 | I7 |

| Sortie OUTB | | | | | | | | | |
|---|---|---|---|---|---|---|---|---|---|
| Type du motif (nombre bits/pixel) | Indication de type | B0 | B1 | B2 | B3 | B4 | B5 | B6 | B7 |
| 1 | (SP0,SP1) = (0,0) | I1 | | | | | | | |
| 2 | (SP0,SP1) = (0,1) | I2 | I3 | | | | | | |
| 4 | (SP0,SP1) = (1,0) | I4 | I5 | I6 | I7 | | | | |
| 8 | (SP0,SP1) = (1,1) | I8 | I9 | I10 | I11 | I12 | I13 | I14 | I15 |

Par conséquent on a une logique de codage des circuits qui est la suivante :

A0 = I0 ; A1 = I1 ; A2 = I2 ; A3 = I3 ; A4 = I4 ; A5 = I5 ; A6 = I6 ; A7 = I7 ;
B0 = I1.$(\overline{SP0 + SP1})$ + I2.$\overline{SP0}$ .SP1 + I4.SP0. $\overline{SP1}$ + I8.SP0.SP1 ;
B1 = I3.$\overline{SP0}$.SP1 + I5. SP0. $\overline{SP1}$ + I9. SP0.SP1 ;
B2 = I6. SP0. $\overline{SP1}$ + I10. SP0.SP1 ;
B3 = I7. SP0. $\overline{SP1}$ + I11. SP0.SP1 ;
B4 = I12 ;
B5 = I13 ;
B6 = I14 ;
B7 = I15.

La figure 2 montre un exemple de logique de codage en particulier pour la première sortie OUTA et pour un premier élément B0 de la deuxième sortie OUTB.

Par exemple, si le nombre de bits par pixel est 4, ils sont gérés de la manière suivante :

- lecture de 16 bits dans la mémoire volatile RAM,
- les moyens de contrôle CNTRL envoient l'indication du type SP0 = 1, SP1 = 0 et les bits de décalage SH de valeur 0 vers les circuits des moyens d'extraction PE,
- en sortie I0 à I3 des moyens de décalage SHIFT, acheminement des quatre premiers bits correspondant à un premier pixel vers la sortie OUTA,
- parallèlement, en sortie I4 à I7 des moyens de décalage SHIFT, acheminement des quatre bits suivants correspondant à un second pixel vers la sortie OUTB,
- relecture des même 16 bits dans la mémoire volatile RAM,
- les moyens de contrôle CNTRL envoient l'indication du type SP0 = 1, SP1 = 0 et les bits de décalage SH de valeur 8 vers les circuits des moyens d'extraction PE (ici on 4 bits de décalage codés respectivement 1 0 0 0),
- décalage des huit bits à droite,
- en sortie I0 à I3 des moyens de décalage SHIFT, acheminement des quatre premiers bits correspondant à un troisième pixel vers la sortie OUTA,
- parallèlement, en sortie I4 à I7 des moyens de décalage SHIFT, acheminement des quatre bits suivants correspondant à un quatrième pixel vers la sortie OUTB, et ainsi de suite.

Les pixels sont acheminés vers les moyens de codage CM. On notera que les moyens de décalage SH ont pour but de simplifier la logique des circuits. De plus, on remarquera que dans ce mode de réalisation, les mots lus (16 bits chacun) sont codés de telle manière que le 1$^{er}$ octet comporte les bits de poids faibles et est codé à droite, tandis que le 2$^{ème}$ octet comporte les bits de poids forts et est codé à gauche. Ce codage est couramment appelé dans la langue anglaise « big-endian ». Bien entendu, on peut très bien imaginer d'autres modes de réalisation des moyens d'extraction PE dans lesquels on a une logique différente avec un codage de mot différent.

Les moyens de codage CM vont permettre de coder les pixels notamment en fonction de leur couleur, de leur transparence etc. Généralement, à chaque pixel est associée une couleur codée sur un certain nombre de bits (c'est la taille d'un pixel). Une couleur comporte trois caractéristiques qui sont le rouge, le vert et le bleu, définies par la commission internationale de l'éclairage (CIE). Cependant, pour permettre une composition d'image homogène, en vue d'un affichage sur l'écran du système de télévision, on effectue un codage de chaque pixel. Ainsi, la couleur d'un pixel est codée par une table de correspondance de couleurs. La couleur d'un pixel est codée sur 24 bits dans ce cas. Selon un mode de réalisation non limitatif, les moyens de codage CM comportent au moins deux tables de correspondance de couleurs, et préférentiellement, ils comportent autant de tables de correspondance de couleurs qu'il y a de types de motif différents, le motif caractère non inclus, et préférentiellement une table d'expansion de couleurs, et une table de transparence ABT. Grâce à ces différentes tables, il sera possible de coder des pixels de différentes tailles.

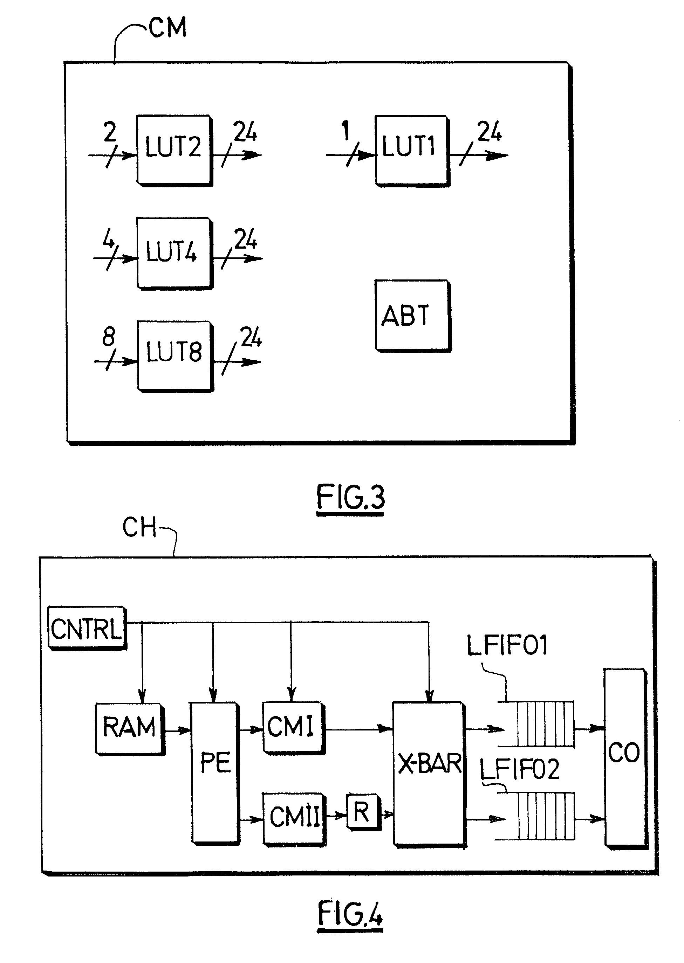

Comme le montre l'exemple de la figure 3, selon un mode de réalisation non limitatif, on a des types de motifs dont les pixels ont une taille de 1, 2, 4 ou 8 bits. Les moyens de codage CM comportent une première table de correspondance de couleurs LUT2 permettant de convertir des pixels de 2 bits en pixels de 24 bits, une deuxième table de correspondance de couleurs LUT4 permettant de convertir des pixels de 4 bits en pixels de 24 bits, une troisième table de correspondance de couleurs LUT8 permettant de convertir des pixels de 8 bits en pixels de 24 bits, une quatrième table d'expansion de couleurs LUT1 permettant de convertir des pixels d'un bit, par exemple des pixels provenant de motifs caractère, en pixel de 24 bits en leur attribuant une couleur, et enfin une cinquième table de transparence ABT permettant d'attribuer des coefficients de transparence entre différents motifs pouvant se superposer à l'écran, coefficients couramment appelés dans la langue anglaise « alpha blending coefficient ». Bien entendu, on peut avoir un codage autre que celui sur 24 bits. Dans ce cas, les moyens de codage CM comportent des tables correspondantes.

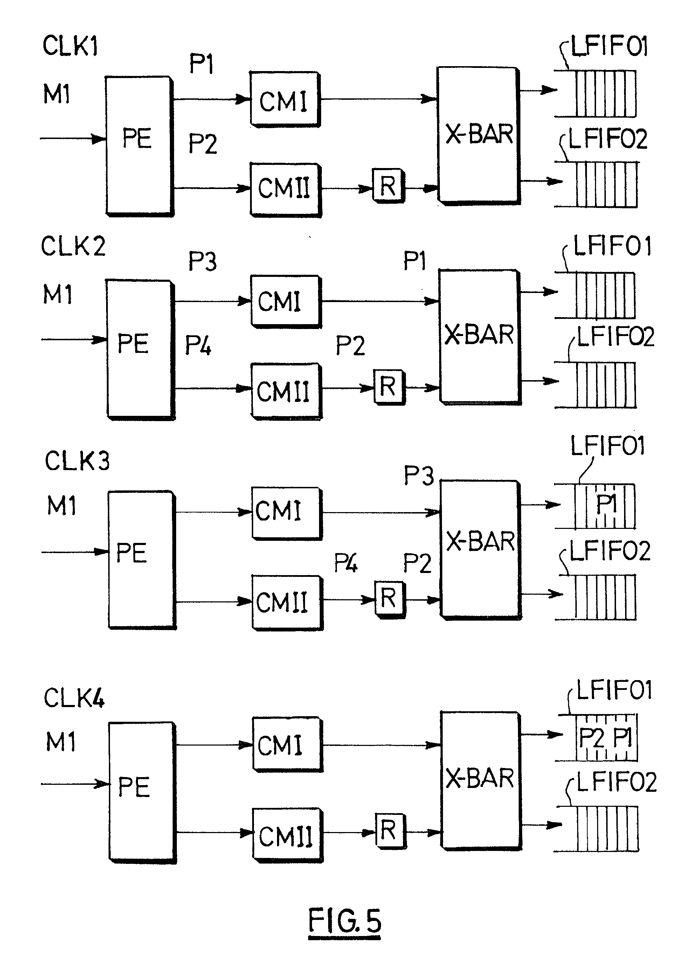

Les moyens de contrôle CNTRL contrôlent ces moyens de codage CM en leur indiquant les différents codes à associer à un pixel extrait, c'est-à-dire la table de couleur ou d'expansion à associer, la couleur à associer pour la table d'expansion et/ou le coefficient de transparence à associer. On remarquera qu'un motif caractère n'a pas de couleur, par conséquent, ce sont les moyens de contrôle CNTRL qui lui en attribuent une. Des moyens de codage CM uniques ne peuvent coder qu'un seul pixel à la fois, aussi, préférentiellement, le circuit intégré CH comporte N moyens de codage CM, avec N>1. Par conséquent, il est possible de coder plusieurs pixels en parallèle. Cela a pour avantage de diminuer le temps de traitement d'un motif. Comme le montre l'exemple de la figure 4, on a deux moyens de codage CMI et CMII pour traiter plusieurs pixels en parallèle.

Dans une troisième étape, les moyens de contrôle CNTRL trient les pixels provenant des moyens de codage CM afin d'éviter que des pixels provenant de différents motifs ne se mélangent. Les moyens d'aiguillage X-BAR reçoivent les différents pixels provenant des moyens de codage CM et aiguillent les pixels ainsi triés vers les moyens de file d'attente LFIFO adéquats. Ces moyens d'aiguillage sont par exemple des multiplexeurs ou des réseaux d'interconnexion couramment appelés « cross-bar » dans la langue anglaise. Les moyens d'aiguillage X-BAR aiguillent les pixels d'un même motif vers les même moyens de file d'attente LFIFO. Ainsi, selon l'exemple de la figure 4, les pixels d'un premier motif seront aiguillés vers des premiers moyens de file d'attente LFIF01, tandis que les pixels d'un deuxième motif seront aiguillés vers des deuxièmes moyens de file d'attente LFIF02. Préférentiellement, le nombre de moyens de file d'attente de pixels LFIFO correspond au nombre de moyens de codage CM.

Selon le mode de réalisation illustré à la figure 4, lorsqu'on a au moins deux moyens de codage CM, le circuit intégré CH comporte préférentiellement des moyens de retardement R aptes à retarder le tri et l'aiguillage d'un pixel par rapport à un autre pixel. Lesdits moyens de retardement sont, par exemple, un registre de retardement R placé entre des deuxièmes moyens de codage CMII et les moyens d'aiguillage de pixels X-BAR. Ce registre R a pour avantage d'éviter à deux pixels provenant d'un même motif de s'écraser mutuellement lorsqu'ils sont aiguillés vers les moyens de file d'attente LFIFO correspondant audit motif, donc vers les même moyens LFIFO.

Prenons un exemple dans lequel un premier motif M1 comprend quatre pixels P1, P2, P3 et P4 de 8 bits chacun. Comme on peut le voir sur la figure 5, lors d'un premier coup d'horloge CLK1, les premier et deuxième pixels P1 et P2 sont extraits en sortie de la mémoire RAM grâce aux moyens d'extraction PE. Au deuxième coup d'horloge CLK2, lesdits pixels P1 et P2 sont codés en parallèle par les deux moyens de codage CMI et CMII, tandis que les troisièmes et quatrième pixels sont extraits grâce aux moyens d'extraction PE. Au troisième coup d'horloge CLK3, seul le premier pixel P1 est trié par les moyens de contrôle CNTRL qui reconnaissent qu'il appartient au premier motif M1, et aiguillé par les moyens d'aiguillage X-BAR vers les premiers moyens de file d'attente LFIFO1. Le registre de retardement R retarde le tri et l'aiguillage du deuxième pixel P2 par rapport au premier pixel P1. Par conséquent, ce n'est qu'au quatrième coup d'horloge CLK4 que les moyens de contrôle trient le deuxième pixel P2 et que les moyens d'aiguillage X-BAR l'aiguillent vers les premiers moyens de file d'attente LFIF01. Ainsi, grâce au registre de retardement R, les premier et deuxième pixels P1 et P2 ne sont pas aiguillés simultanément vers les même moyens de file d'attente LFIF01 et ne s'écrasent donc pas mutuellement, ce qui arriverait sans la présence dudit registre R.

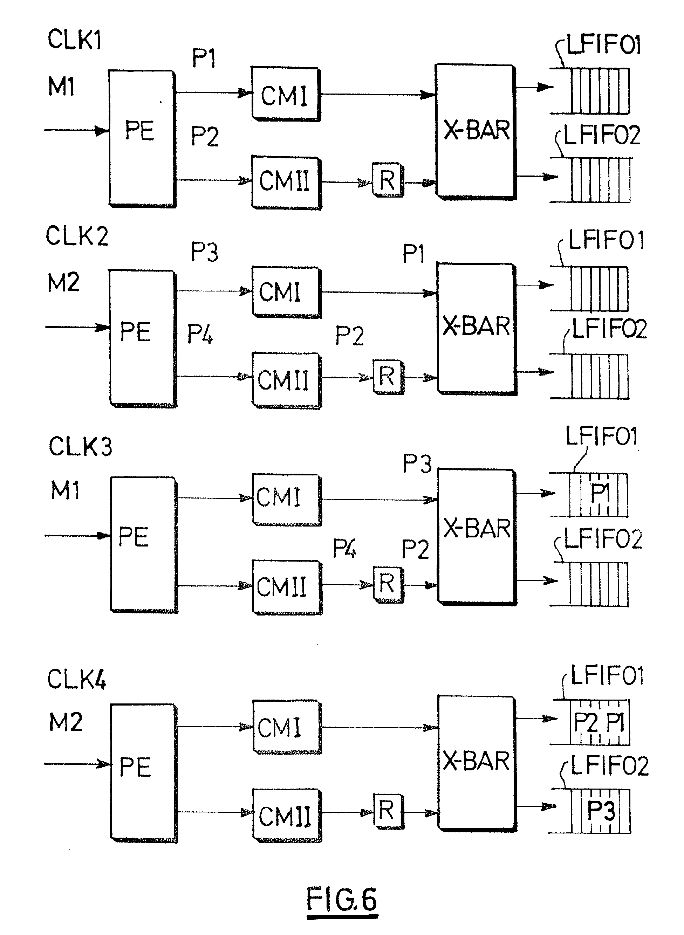

Cependant, un dernier problème subsiste. En effet selon l'exemple de la figure 5, si les quatre pixels P1, P2, P3 et P4 appartiennent au même premier motif M1, au troisième coup d'horloge CLK3, il va également y avoir un écrasement entre le deuxième pixel P2 et le troisième pixel extrait P3. Aussi, afin de résoudre ce deuxième problème d'écrasement de pixels, les moyens de contrôle CNTRL contrôlent la lecture des pixels des différents motifs dans la mémoire volatile RAM, la lecture étant entrelacée sur plusieurs desdits motifs. A cet effet, on effectue M lectures consécutives de pixels sur M motifs différents, M étant le nombre de moyens de codage CM existants dans le circuit intégré CH. Par conséquent, selon l'exemple de la figure 6, si on a deux moyens de codage, on effectue deux lectures consécutives de pixels sur deux motifs différents. Ainsi, les premier et deuxième pixels P1 et P2 d'un premier motif M1 sont extraits lors d'un premier coup d'horloge CLK1 et les premier et deuxième pixels P3 et P4 d'un deuxième motif M2 sont extraits lors d'un deuxième coup d'horloge CLK2. Lors d'un quatrième coup d'horloge CLK4, il n'y a pas d'écrasement puisque le deuxième pixel P2 du premier motif M1 est aiguillé vers des premiers moyens de file d'attente LFIF01 et le premier pixel P3 du deuxième motif M2 est aiguillé vers des deuxièmes moyens de file d'attente LFIF02 et ainsi de suite.

Enfin, lorsque l'ensemble des pixels d'un ou plusieurs motifs a été traité selon le procédé décrit précédemment, les différents motifs sont envoyés, lors d'une dernière étape, au compositeur CO. Ledit compositeur CO compose l'image à afficher, d'une part, avec l'image provenant de la mémoire externe (non représentée), et, d'autre part, avec lesdits motifs provenant de la mémoire volatile RAM, selon des techniques connues et divulguées dans le brevet US numéro 09/333633 déposé le 15 juin 1999. Par la suite, le coprocesseur de sortie vidéo affiche l'image ainsi composée à l'écran.

Ainsi l'invention décrite a pour avantage d'éviter de gérer l'ensemble des motifs au niveau d'un processeur ou coprocesseur de traitement d'images vidéo et par suite d'éviter de surcharger le bus de données relié audit processeur et coprocesseur ou encore d'éviter d'encombrer la bande passante. Les motifs sont maintenant gérés au niveau du coprocesseur de sortie vidéo. De plus, le circuit intégré ne comporte qu'une unique mémoire. Ceci a pour avantage de réduire la taille du circuit intégré par rapport à d'autres circuits qui comportent plusieurs mémoires et par suite plusieurs interfaces mémoire (moyens d'accès aux mémoires) nécessaires à leur fonctionnement, ces interfaces prenant également beaucoup de place dans un circuit. Enfin, le fait de pouvoir paralléliser le traitement des pixels comme nous l'avons vu précédemment sans augmenter la vitesse de l'horloge, a pour avantage de permettre d'utiliser une mémoire moins rapide et donc moins chère que les autres.

Bien entendu, le cadre de l'invention n'est nullement limité au mode de réalisation décrit.

Bien entendu, l'invention n'est nullement limitée au domaine de la télévision, elle peut s'étendre à d'autres domaines, notamment à tous ceux qui utilisent un écran couleur LCD tels que de futurs systèmes de téléphones portables ou d'agendas électroniques en couleur.

## Revendications

**1.** Circuit intégré (CH) de traitement d'ensembles de données, lesdits ensembles de données comportant des pixels, **caractérisé en ce qu'**il comporte :

- une mémoire unique (RAM) apte à sauvegarder au moins un ensemble de données comprenant un nombre de pixels de taille variable d'un type d'ensemble à un autre,
- des moyens de contrôle (CNTRL) de pixels aptes à donner une indication du type d'un ensemble de données,
- des moyens d'extraction (PE) de pixels aptes à sélectionner et à lire ledit ensemble de données, à extraire au moins un pixel dudit ensemble de données en sortie de ladite mémoire (RAM) en fonction de ladite indication, et à acheminer ledit au moins pixel vers des moyens de codage (CM).

2. Circuit intégré selon la revendication 1, **caractérisé en ce que** des moyens de codage (CM) comportent au moins deux tables de correspondance de couleurs (LUT).

3. Circuit intégré selon la revendication 1, **caractérisé en ce qu'**il comporte N moyens de codage (CM), avec N>1.

4. Circuit intégré selon la revendication 1, **caractérisé en ce que** les moyens de contrôle (CNTRL) sont aptes à trier des pixels provenant des moyens de codage (CM).

5. Circuit intégré selon la revendication 1, **caractérisé en ce qu'**il comporte en outre des moyens d'aiguillage (X-BAR) de pixels aptes à aiguiller les pixels d'un même ensemble de données vers des même moyens de file d'attente (LFIFO).

6. Circuit intégré selon la revendication 5, **caractérisé en ce qu'**il comporte en outre des moyens de retardement (R) aptes à retarder l'aiguillage d'un pixel par rapport à un autre pixel.

7. Circuit intégré selon la revendication 1, **caractérisé en ce que** les moyens de contrôle (CNTRL) contrôlent la lecture des pixels de différents ensembles de données dans la mémoire (RAM), ladite lecture étant entrelacée sur plusieurs desdits ensembles de données.

8. Procédé de traitement d'ensemble de données, les différents ensembles de données comportant des pixels, **caractérisé en ce qu'**il comporte les étapes de :

- sauvegarder dans une mémoire unique (RAM) au moins un ensemble de données comprenant un nombre de pixels de taille variable d'un type d'ensemble à un autre,
- donner une indication du type d'un ensemble de données,
- sélectionner et lire ledit ensemble de données,
- extraire au moins un pixel dudit ensemble de données en sortie de ladite mémoire en fonction de ladite indication,
- acheminer ledit au moins pixel vers des moyens de codage (CM).

9. Procédé de traitement de données selon la revendication 8, **caractérisé en ce que** des moyens de codage (CM) comportent au moins deux tables de correspondance de couleurs (LUT).

10. Procédé de traitement de données selon la revendication 8, **caractérisé en ce qu'**il utilise N moyens de codage (CM), avec N>1.

11. Procédé de traitement de données selon la revendication 8, **caractérisé en ce qu'**il comporte une étape supplémentaire de trier des pixels provenant des moyens de codage (CM).

12. Procédé de traitement de données selon la revendication 8, **caractérisé en ce qu'**il comporte une étape supplémentaire d'aiguiller les pixels d'un même ensemble de données vers des même moyens de file d'attente (LFIFO).

13. Procédé de traitement de données selon la revendication 12, **caractérisé en ce qu'**il comporte une étape supplémentaire de retarder l'aiguillage d'un pixel par rapport à un autre pixel.

14. Procédé de traitement de données selon la revendication 8, **caractérisé en ce que** la lecture des pixels de différents ensembles de données est entrelacée sur plusieurs desdits ensembles de données.

15. Procédé de traitement de données selon la revendication 8, **caractérisé en ce que** les étapes sont effectuées par un circuit intégré (CH).

16. Coprocesseur de sortie vidéo comprenant un circuit intégré (CH) de traitement d'ensembles de données tel que revendiqué dans les revendications 1 à 7.

17. Système de télévision comprenant un circuit intégré (CH) de traitement d'ensembles de données tel que revendiqué dans les revendications 1 à 7.

## FIG.1

FIG.2

## CM

$$\xrightarrow{2} \boxed{LUT2} \xrightarrow{24}$$

$$\xrightarrow{1} \boxed{LUT1} \xrightarrow{24}$$

$$\xrightarrow{4} \boxed{LUT4} \xrightarrow{24}$$

$$\boxed{ABT}$$

$$\xrightarrow{8} \boxed{LUT8} \xrightarrow{24}$$

FIG.3

## CH

CNTRL

RAM    PE    CMI    X-BAR    LFIFO1    CO

CMII    R    LFIFO2

FIG.4

FIG.5

CLK1

M1

P1

P2

PE

CM1

CMII

R

X-BAR

LFIFO1

LFIFO2

CLK2

M2

P3

P4

PE

CM1

CMII

R

P1

P2

X-BAR

LFIFO1

LFIFO2

CLK3

M1

PE

CM1

CMII

R

P3

P4

P2

X-BAR

LFIFO1

P1

LFIFO2

CLK4

M2

PE

CM1

CMII

R

X-BAR

LFIFO1

P2 P1

LFIFO2

P3

FIG.6

**Office européen des brevets**

## RAPPORT DE RECHERCHE EUROPEENNE

Numéro de la demande

EP 02 07 5551

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 805 175 A (PRIEM CURTIS) 8 septembre 1998 (1998-09-08) | 8,9 | G09G5/36 G09G5/06 |
| Y | * abrégé * * colonne 1, ligne 8 - ligne 51 * * colonne 2, ligne 54 - colonne 3, ligne 26 * * colonne 4, ligne 33 - ligne 41 * * colonne 5, ligne 34 - colonne 6, ligne 46; figure 2 * * colonne 8, ligne 50 - ligne 67 * * colonne 11, ligne 1 - ligne 4 * * colonne 11, ligne 56 - colonne 13, ligne 38; figures 4,5 * | 1-3,7, 12,14-17 | G09G1/16 |
| | --- | | |
| Y | US 6 043 829 A (INOUE KAZUNARI) 28 mars 2000 (2000-03-28) * abrégé * * colonne 1, ligne 12 - ligne 35; figure 6 * * colonne 1, ligne 52 - ligne 54 * * colonne 2, ligne 52 - ligne 62; figure 5 * * colonne 3, ligne 7 - colonne 4, ligne 52; figures 1-3 * | 1-3,7, 14-17 | |
| | | | **DOMAINES TECHNIQUES RECHERCHES (Int.Cl.7)** |
| | --- | | G09G H04N |
| Y | US 5 867 178 A (BAKER PAUL A ET AL) 2 février 1999 (1999-02-02) | 12 | |
| A | * abrégé * * colonne 5, ligne 1 - colonne 6, ligne 10; figure 3 * * colonne 9, ligne 19 - ligne 67; figure 11 * | 1,2,5,17 | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 27 juin 2002 | Corsi, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 02 07 5551

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 815 137 A (STORM SHAWN ET AL) 29 septembre 1998 (1998-09-29) | 8-10 | |
| A | * abrégé * * colonne 1, ligne 22 - ligne 29 * * colonne 4, ligne 44 - ligne 67; figure 3 * * colonne 5, ligne 34 - ligne 46; figure 4 * * colonne 8, ligne 38 - colonne 9, ligne 10; figure 5 * | 1-3 | |
| X | US 5 821 918 A (NALLY ROBERT MARSHALL ET AL) 13 octobre 1998 (1998-10-13) | 8,9 | |
| A | * abrégé * * colonne 1, ligne 63 - colonne 2, ligne 44 * * colonne 4, ligne 17 - colonne 5, ligne 11; figure 1 * * colonne 5, ligne 30 - ligne 35 * * colonne 5, ligne 64 - colonne 6, ligne 62; figures 2,3 * * colonne 7, ligne 61 - colonne 8, ligne 9; figure 4 * * colonne 9, ligne 6 - colonne 10, ligne 33 * | 1,2,8 | DOMAINES TECHNIQUES RECHERCHES (Int.Cl.7) |
| A | US 5 877 741 A (MULVENNA JOHN DAVID ET AL) 2 mars 1999 (1999-03-02) * abrégé * * colonne 8, ligne 1 - ligne 52; figure 5 * * colonne 9, ligne 11 - ligne 33 * | 5,7,14, 17 | |

Le présent rapport a été établi pour toutes les revendications

| Lieu de la recherche | Date d'achèvement de la recherche | Examinateur |
|---|---|---|
| LA HAYE | 27 juin 2002 | Corsi, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 233 402 A1**

## ANNEXE AU RAPPORT DE RECHERCHE EUROPEENNE
## RELATIF A LA DEMANDE DE BREVET EUROPEEN NO.

EP 02 07 5551

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-06-2002

| Document brevet cité au rapport de recherche | | Date de publication | Membre(s) de la famille de brevet(s) | | Date de publication |
|---|---|---|---|---|---|
| US 5805175 | A | 08-09-1998 | AUCUN | | |
| US 6043829 | A | 28-03-2000 | JP | 10302054 A | 13-11-1998 |
| US 5867178 | A | 02-02-1999 | US | 6172669 B1 | 09-01-2001 |
| US 5815137 | A | 29-09-1998 | AUCUN | | |
| US 5821918 | A | 13-10-1998 | US | 5581280 A | 03-12-1996 |
| | | | US | 5577203 A | 19-11-1996 |
| | | | US | 5625379 A | 29-04-1997 |
| US 5877741 | A | 02-03-1999 | US | 5694141 A | 02-12-1997 |
| | | | CN | 1173670 A | 18-02-1998 |
| | | | EP | 0802519 A1 | 22-10-1997 |
| | | | JP | 10049125 A | 20-02-1998 |
| | | | DE | 69609974 D1 | 28-09-2000 |
| | | | DE | 69609974 T2 | 21-12-2000 |
| | | | EP | 0834111 A1 | 08-04-1998 |
| | | | JP | 2001515613 T | 18-09-2001 |
| | | | WO | 9641255 A1 | 19-12-1996 |

EPO FORM P0460

Pour tout renseignement concernant cette annexe : voir Journal Officiel de l'Office européen des brevets, No.12/82